# NEUE EUROPÄISCHE PATENTSCHRIFT

(11) **EP 0 815 397 B2**
(45) Veröffentlichungstag und Bekanntmachung des Hinweises auf die Entscheidung über den Einspruch: **01.10.2003**
(45) Hinweis auf die Patenterteilung: 04.08.1999
(21) Anmeldenummer: 96904722.4
(22) Anmeldetag: 29.02.1996
(51) Int. Cl.: F23N 5/00, F23N 5/08

(54) **VERFAHREN UND VORRICHTUNG ZUR FEUERUNGSREGELUNG EINER DAMPFERZEUGERANLAGE**
PROCESS AND DEVICE FOR REGULATING THE COMBUSTION IN A STEAM GENERATION FACILITY
PROCEDE ET DISPOSITIF DE REGULATION DE LA COMBUSTION D'UN GENERATEUR DE VAPEUR

(30) Priorität: 15.03.1995 DE 19509412
(43) Veröffentlichungstag der Anmeldung: 07.01.1998
(73) Patentinhaber: SIEMENS AKTIENGESELLSCHAFT, 80333 München (DE)
(72) Erfinder: HOFMANN, Horst, D-91088 Bubenreuth (DE); LAUSTERER, Gerhard, D-76870 Kandel (DE)
(86) Internationale Anmeldenummer: DE9600360
(87) Internationale Veröffentlichungsnummer: WO96028694

(56) Entgegenhaltungen:
- EP-A- 0 576 955
- DE-A- 4 305 645
- US-A- 5 249 954
- UMWELT TECHNOLOGIE AKTUELL, Mai 1993, Seiten 403-406, XP000574162 WINTRICH: "SCHADSTOFFARME VERBRENNUNG" in der Anmeldung erwähnt
- "Innovative Prozessleittechnik in der thermischen Abfallbehandlung" aus Druckschrift "c & i", 11.Jahrg.(1994), H.9 von Andreas Jaeschke und Hubert B. Keller

## Beschreibung

Die Erfindung bezieht sich auf ein Verfahren zur Feuerungsregelung einer Dampferzeugeranlage, bei dem die Temperatur und die Konzentration mindestens eines im Verbrennungsprozeß entstehenden Reaktionsproduktes ermittelt werden. Sie bezieht sich ferner auf eine Vorrichtung zur Durchführung des Verfahrens.

Bei der Verbrennung eines fossilen Brennstoffs in einer Dampferzeugeranlage steht die ständige Verbesserung-des Verbrennungsprozesses im Vordergrund der Bemühungen, insbesondere um eine gleichmäßige Dampfproduktion zu erzielen. Zur Erreichung eines besonders guten Verbrennungsprozesses mit einer möglichst geringen Emission von Schadstoffen, insbesondere von NOₓ, und einem hohen Ausbrand sowie einem besonders hohen Wirkungsgrad bei gleichzeitig geringem Rauchgasvolumenstrom müssen eine Vielzahl von möglichen Stellgrößen in geeigneter Weise vorgesteuert werden. Dazu zählen insbesondere die Zuführung und Verteilung eines Brennstoffs oder das Mischungsverhältnis bei mehreren Brennstoffen, die Luftzufuhr und deren räumliche Aufteilung, die Temperatur der Verbrennungsluft und deren Sauerstoffanreicherung, die Zufuhr eines Hilfsbrennstoffs oder anderer Zuschlagstoffe zur NOₓ Minderung und/oder die Zufuhr von Wasserdampf zur Einstellung der Verbrennungstemperatur. Dies erfolgt üblicherweise durch eine geeignete Feuerführung, d.h. durch eine geeignete Feuerungsregelung.

Aufgrund der Vielzahl der Stellgrößen sowie der ebenfalls großen Anzahl von Regelgrößen handelt es sich bei der Feuerungsführung um ein sehr komplexes Regelproblem. Zu dessen Lösung reicht daher ein auf einem mathematischen Modell der Regelstrecke aufbauendes und von in Echtzeit erfaßten Meßwerten abhängiges Regelverfahren häufig nicht aus. Der Grund hierfür liegt insbesondere darin, daß bei der Verbrennung von fossilen Brennstoffen, wie z.B. Kohle, oder Müll die chemische Zusammensetzung und damit der Heizwert des Brennstoffs oder der Brennstoffmischung starken Schwankungen unterliegt. So treten bei der fossilen Dampferzeugung durch den Einsatz von z.B. Kohle unterschiedlicher Herkunft oder bei der Müllverbrennung aufgrund der heterogenen Zusammensetzung des Mülls Schwankungen des Heizwertes auf, die sich sowohl auf die Schadstoffemission als auch auf die Dampfproduktion in nachteiliger Weise auswirken. Diese Nachteile bestehen auch bei der industriellen Reststoffverbrennung, bei der üblicherweise feste und flüssige sowie gasförmige Brennstoffe gleichzeitig verbrannt werden.

Zur Berücksichtigung von Unsicherheiten aufgrund der in der Regel nicht bekannten Zusammensetzung und der nur unzureichend meßbaren Qualität des . Brennstoffs ist es bekannt, zur Feuerungsregelung Fuzzy-Technologie einzusetzen. Ein derartiges Verfahren zur Feuerungsregelung ist in dem Aufsatz "Regelung einer Müllverbrennungsanlage mit Fuzzy-Logik" von C. von Altrock, B. Krause, K. Limper und W. Schäfer, in "Fuzzy Logik", Bd. 2, R. Oldenbourg Verlag, 1994, Seiten 189 - 201, beschrieben. Bei diesem bekannten Verfahren wird zur Temperaturmessung eine Infrarot-Kamera zur Ermittlung eines zweidimensionalen Temperaturbildes eingesetzt. Nachteilig dabei ist jedoch, daß mit diesem Verfahren nur die Temperatur, nicht aber die Zusammensetzung des bei der Verbrennung entstehenden Rauchgases ermittelt werden kann. Außerdem treten aufgrund der lediglich lokalen Temperaturmessung Verfälschungen durch Strähnenbildung oder Schieflagen im Rauchgaskanalauf. Eine derartige Temperaturmessung gibt keinen Aufschluß über die Verhältnisse an einzelnen Brennern oder an bestimmten Stellen des Verbrennungsraumes, so daß bei dem bekannten Regelungsverfahren räumliche Verteilungen innerhalb des Verbrennungsprozesses charakterisierende Daten nicht berücksichtigt werden.

Für eine weitere Verbesserung der Feuerungsregelung oder Feuer führung des Verbrennungsprozesses kommt daher der Kenntnis der Temperaturverteilung und des Konzentrationsprofils von im Verbrennungsprozeß entstehenden Reaktionsprodukten entscheidende Bedeutung zu. Diese Informationen können mittels Emissionsspektroskopie aus der Eigenstrahlung der Flamme gewonnen werden. Ein derartiges Verfahren zur "Simultanen mehrdimensionalen spektroskopischen Erfassung von Temperatur und Verbrennungsradikalen" ist in dem Aufsatz "Schadstoffarme Verbrennung" von F Wintrich, in Umwelt Technologie Aktuell, UTA 5/93, Seiten 403 bis 406., beschrieben. Dabei wird die Temperatur durch Verhältnispyrometrie und die Konzentration der Reaktionsprodukte oder Verbrennungsradikale durch Emissionsspektroskopie ermittelt. Regelgröße bei diesem bekannten Verfahren der Feuerungsführung ist die Schadstoffemission, wobei lediglich durch gezielte Zugabe von Hilfsstoffen, z. B. durch Zugabe von NH₃, und/oder durch gezielte Luftversorgung einzelner Brenner regelungstechnisch eingeqriffen wird. Aus der De 4 305 645 A1 ist ein Verfahren und eine Vorrichtung nach dem Oberbegriff der Ansprüche 1 bzw. 6 bekannt.

Der Erfindung liegt die Aufgabe zugrunde, ein Verfahren zur Feuerungsregelung einer Dampferzeugeranlage anzugeben, mit dem sowohl eine möglichst geringe Emission von bei der Verbrennung entstehenden Schadstoffen als auch eine besonders gleichmäßige Dampfproduktion und ein möglichst hoher Anlagenwirkungsgrad erreicht wird. Dies soll bei einer zur Durchführung des Verfahrens geeigneten Vorrichtung mit einfachen Mitteln erreicht werden.

Bezüglich des Verfahrens wird diese Aufgabe erfindungsgemäß dadurch gelöst, daß die Zusammensetzung des dem Verbrennungsprozeß zugeführten Reaktionsgemisches in Abhängigkeit von der räumlichen Temperaturverteilung und des Konzentrationsprofils im Verbrennungsraum mittels mindestens eines durch Fuzzy- oder Neuro-Fuzzy-Logik ermittellen Sollwertes gesteuert wird.

Die Erfindung geht dabei von der Überlegung aus, anhand einer schnellen, örtlich verteilten dreidimensionalen Messung der Temperatur und der Konzentration von Verbrennungsradikalen mittels Fuzzy Logik zunächst lediglich Sol-lwerte zu ermitteln, die dann einer unterlagerten, konventionellen Regelung zur Bildung der für die Feuerungsführung erforderlichen Stellsignale als Führungsgrößen vorgegeben werden.

Um dabei unterschiedliche und stark schwankende Brennwerte korrigieren zu können, wird ein Sollwert für die Zusammensetzung des dem Verbrennungsprozeß zuzuführenden Brennstoffs oder Brennstoffgemisches ermittelt. Bei einer Müllverbrennungsanlage gibt dieser Sollwert die dem Verbrennungsprozeß manuell oder automatisch zuzuführende Abfallmischung vor. Um darüber hinaus eine besonders hoh Feuerungsauslastung zu erzielen, wird zweckmäßigerweise ein weiterer Sollwert für die Luftzufuhr zum Verbrennungsprozeß ermittelt.

Ferner wird zweckmäßigerweise ein Sollwert für die Dosis eines Zugabestoffes zum Brennstoff ermittelt. Beispielsweise kann durch eine genau dosierte Zugabe von Harnstoff an einer geeigneten Stelle innerhalb des Feuerraums die NOₓ-Bildung verringert werden. Auch die Zugabe von Sauerstoff zur O₂-Anreicherung hat sich in Versuchen als positiv für die Emissionen und den Ausbrand erwiesen. Insgesamt kann durch gezielte Dosierung eines derartigen Zugabestoffes zum Brennstoff eine besonders geringe Schadstoffemission erreicht werden.

Gemäß einer zweckmäßigen Weiterbildung werden die räumliche Temperaturverteilung und das räumliche Konzentrationsprofil aus einem vom Verbrennungsprozeß aufgenommenen Emissionsspektrum tomographisch rekonstruiert. Durch eine computertomographische Rekonstruktion der Emissionsspektren können vollständige Meßfelder für die räumliche Temperaturverteilung und die Könzentrationsprofile der Reaktionsprodukte abgebildet werden. Aus diesen Meß- oder Datenfeldern können vorteilhafterweise spezielle Merkmale, wie z.B. die Lage von Maxima oder die Form einer Verteilung sowie deren räumliche Veränderung, abgeleitet und zur Ermittlung der Sollwerte herangezogen werden.

Bezüglich der Vorrichtung zur Feuerungsregelung einer Dampferzeugeranlage, mit einem Verbrennungsraum, und mit einem mit mindestens zwei optischen Sensoren zur Aufnahme von Strahlungsdaten aus dem Verbrennungsraum verbundenen Datenverarbeitungssystem wird die genannte Aufgabe gelöst durch eine mit dem Datenverarbeitungssystem verbundene Regeleinrichtung, die einen Fuzzy- oder Neuro-Fuzzy-Reglerbaustein zur Ermittlung einer Anzahl von Sollwerten umfaßt, wobei die Zusammensetzung des dem Verbrennungsraum zugeführten Reaktionsgemisches in Abhängigkeit von den Strahlungsdaten mittels des oder mehrerer Sollwerte(s) gesteuert wird.

Bei der Kombination des Fuzzy-Reglerbausteins mit einem neuronalen Netz können z.B. einige oder alle Parameter des Fuzzy-Reglers durch neuronale Netze bestimmt werden. Auch können z.B. Zugehörigkeitsfunktionen einer Fuzzyfizierung oder einer Defuzzyfizierung durch entsprechende neuronale Netze derart bestimmt werden, daß insgesamt ein besonders günstiges Regelverhalten erzielt wird.

Gemäß einer vorteilhaften Ausgestaltung umfaßt die Regeleinrichtung einen mit dem Fuzzy- oder Neuro-Fuzzy-Reglerbaustein verbundenen weiteren Reglerbaustein. Dieser weitere Reglerbaustein ist zweckmäßigerweise ein konventioneller Regler, der zur Bildung von Stellsignalen für die Ansteuerung von Zuführeinrichtungen verschiedener Reaktionsstoffe zum Verbrennungsraum dient.

Um die Soll-Zusammensetzung des dem Verbrennungsprozeß zuzuführenden Reaktionsgemisches darstellen zu können, ist zweckmäßigerweise das Datenverarbeitungssystem mit einem Anzeigegerät verbunden. Dies stellt den oder jeden Sollwert für die Zusammensetzung des Reaktionsgemisches, insbesondere für die Zusammensetzung eines aus mehreren Bestandteilen bestehenden Brennstoffs, dar.

Um die Menge der verschiedenen im Verbrennungsraum zur Reaktion zu bringenden Reaktionsstoffe getrennt und unabhängig voneinander einstellen zu können, ist die Regeleinrichtung zweckmäßigerweise über jeweils eine Ansteuerleitung mit einer ersten Zuführeinrichtung für Brennstoff und mit einer zweiten Zuführeinrichtung für Luft sowie mit einer dritten Zuführeinrichtung für einen Zuschlagstoff verbunden.

Ausführungsbeispiele der Erfindung werden anhand einer Zeichnung näher erläutert. Darin zeigt:

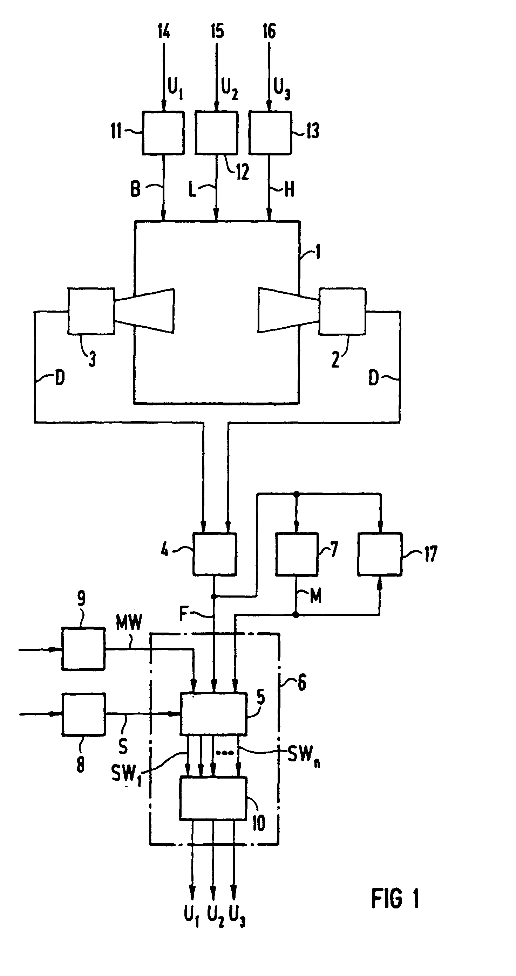

- Figur 1: ein Funktionsschema einer Feuerungsregelung, und
- Figur 2: ein Funktionsschema eines Fuzzy-Reglers zur Bestimmung von Sollwerten für die Feuerungsregelung.

Einander entsprechende Teile sind in beiden Figuren mit den gleichen Bezugszeichen versehen.

In einem Feuer- oder Verbrennungsraum 1 einer nicht dargestellten Dampferzeugeranlage, z.B. einem fossil gefeuerten Dampferzeuger einer Kraftwerksanlage oder einer Müllverbrennungsanlage, findet der Verbrennungsprozeß statt. Optische Sensoren 2 und 3 in Form von Spezialkameras erfassen Strahlungsdaten D aus dem Verbrennungsraum 1 in Form von Emissionsspektren und leiten diese einem Datenverarbeitungssystem 4 zu. Aus den Emissionsspektren werden im Datenverarbeitungssystem 4 mittels computertomographischer Rekonstruktion eine räumliche Temperaturverteilung und dreidimensionale ortsaufgelöste Konzentrationsprofile der bei der Verbrennung entstehenden Reaktionsprodukte, wie z.B. NOₓ, COₓ, CH und O₂, berechnet. Dazu wird die Temperatur durch Verhältnispyrometrie und die Konzentration der Verbrennungsradikale durch Emissionsspektroskopie ermittelt, wobei die computertomographische Rekonstruktion der Emissionsspektren vollständige Meßfelder liefert. Diese Meßfelder F der Temperaturverteilung und der Konzentrationsprofile werden einem Fuzzy-Reglerbaustein 5 einer Regeleinrichtung 6 zugefürht.

Die Temperaturverteilung und die Konzentrationsprofile der Reaktionsprodukte des Verbrennungsprozesses charakterisierende Merkmalsdaten M werden außerdem einem Baustein 7 zur speziellen Merkmalsextraktion zugeführt. Dazu werden aus den Meßfeldem F spezielle Merkmale, wie z.B. die Lage von Maxima oder die Form der Verteilung oder deren räumliche Veränderung abgeleitet. Diese Merkmalsdaten M werden ebenfalls in dem Fuzzy-Reglerbaustein 5 verarbeitet.

Des weiteren werden dem Fuzzy-Reglerbaustein 5 Sollwerte S von einem Sollwertgenerator B sowie anlagenrelevante Meßwerte MW von einer Meßwerterfassung 9 vorgegeben. In dem Fuzzy-Reglerbaustein 5 der Regeleinnrichtung 6 werden aus den Meßfeldem F und den Merkmalsdaten M sowie aus den vorgegebenen Sollwerten S und den Meßwerten MW Sollwerte SW₁...SWₙ ermittelt.

Der Fuzzy-Reglerbaustein 5 ist mit einem diesem unterlagerten weiteren Reglerbaustein 10 der Regeleinrichtung 6 verbunden. Dieser weitere Regelbaustein 10 der Regeleinrichtung 6 ist zweckmäßigerweise konventionell aufgebaut. Er enthält alle zum Betreiben der Dampferzeugeranlage vorgesehenen Regelkreise, z.B. für Dampfleistung. Luftüberschuß, Mediendurchfluß und Drehzahl und dient zur Ansteuerung aller den Verbrennungsprozeß beeinflussenden Stellglieder. Dazu erhält der konventionelle Reglerbaustein 10 als Führungsgrößen die Sollwerte SW₁...SWₙ vom Fuzzy-Reglerbaustein 5 und bildet ein erstes Stellsignal U₁ für die Ansteuerung einer Einrichtung 11 zur Brennstoffzufuhr und Brennstoffverteilung. Außerdem werden ein zweites Stellsigna U₂ zur Ansteuerung einer Einrichtung 12 zur Luftzufuhr und Luftverteilung sowie ein drittes Stellsignal U₃ zur Ansteuerung einer Zugabeeinrichtung 13 für Hilfs- oder Zuschlagstoffe gebildet, wie z.B. Harnsäure zur NOₓ-Minderung oder Sauerstoff zur O₂-Anreicherung. Die Ansteuerung erfolgt über Ansteuerleitungen 14, 15 und 16, über die die Regeleinrichtung 6 mit den Einrichtungen 11, 12 bzw. 13 verbunden ist.

Die die Temperaturverteilung und Konzentrationsprofile der Reaktionsstoffe im Verbrennungsraum 1 charakterisierenden Meßfelder F sowie die Merkmalsdaten M werden in einem Anzeigegerät 17 visualisiert, das z.B. in einer Leitwarte aufgestellt ist. Somit steht dem Bedienpersonal jederzeit ein Abbild des Verbrennungsprozesses zur Verfügung.

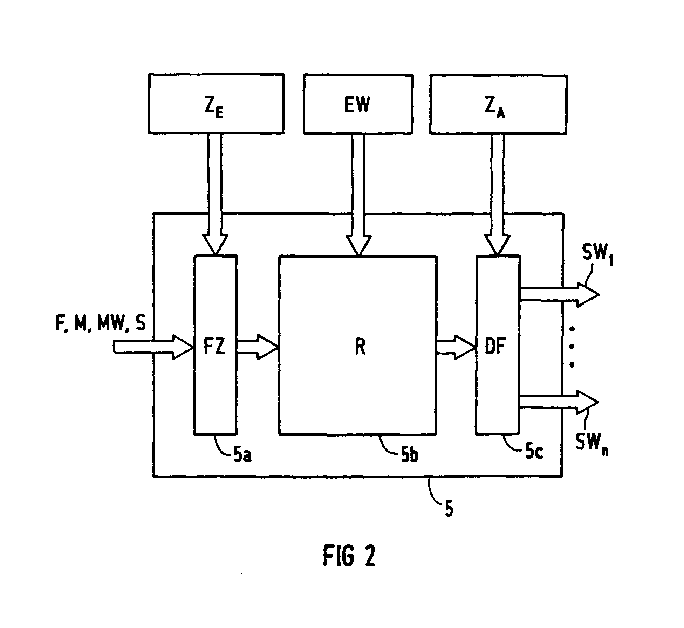

Figur 2 zeigt den prinzipiellen Aufbau des Fuzzy-Reglerbausteins 5, dessen Funktionsweise im folgenden beschrieben wird. Zum Entwurf des Fuzzy-Reglerbausteins 5 werden zunächst die numerischen Wertebereiche der Eingangsgrößen, d.h. der Meßfelder F, der Merkmalsdaten M, der Meßwerte MW und der Sollwerte S, und der Ausgangsgrößen, d.h. der Sollwerte SW₁...SWₙ, durch linguistische Werte, wie "klein", "mittel" oder "groß", qualitativ charakterisiert. Jeder linguistische Wert der Eingangsgrößen F, M, MW, S wird durch eine Zugehörigkeitsfunktion Z_{E} beschrieben. Diese quantifiziert die qualitative Aussage eines jeden linguistischen Wertes in der Weise, daß sie ihren Wahrheitswert für jeden auftretenden zahlenmäßigen Wert einer jeden der Eingangsgrößen F, M, MW, S angibt. Durch diesen in einem Berechnungselement 5a des Fuzzy-Reglers 5 stattfindenden Vorgang der Fuzzyfizierung FZ wird der Betriebsbereich der betrachteten Eingangsgrößen F, M, MW, S in "unscharfe" Teilbereiche unterteilt. Die Anzahl der Teilbereiche entspricht der Anzahl linguistischer Werte einer jeden Eingangsgröße F, M, MW oder S. Bei mehreren Eingangsgrößen entspricht die Anzahl der Teilbereiche der Anzahl der Kombinationsmöglichkeiten von linguistischen Werten verschiedener Eingangsgrößen F, M, MW, S.

Für jeden dieser Teilbereiche oder - auch zusammengefaßt - für mehrere Teilbereiche wird die Regelungsstrategie durch WENN-DANN-Regeln R bestimmt. Diese Regeln R werden in einem Basiselement 5b des Fuzzy-Reglerbausteins 5 in Form eines linguistischen Regelwerkes hinterlegt. In jeder Regel R wird für eine Kombination von linguistischen Werten der Eingangsgrößen F, M, MW, S, z.B. durch eine Verknüpfung mit den Operatoren "UND" oder "ODER", eine Folgerung als linguistischer Wert für jeweils eine Ausgangsgröße SW₁...SWₙ bestimmt. Zur Berechnung der Wahrheitswerte werden die aus den Zugehörigkeitsfunktionen Z_{E} der einzelnen Eingangsgrößen F, M, MW, S ermittelten Wahrheitswerte entsprechend der in den Regeln R verwendeten Operatoren verknupft. Dabei speilt eine wichtige Rolle, Daß das heuristische Expertenwissen EW in Form einer Erfahrungsstrategie unmittelbar in die linguistischen Regeln R der Fuzzy-Regelung jederzeit eingebunden werden kann.

Mittels einer als Inferenz bezeichneten Berechnung der Folgerungen der einzelnen Regeln R wird beispielsweise die in einer Regel R durch den entsprechenden linguistischen Wert benannte Zugehörigkeitsfunktion Z_{A} der Ausgangsgrößen SW₁...SWₙ auf den von der Regel R gelieferten Wahrheitswert begrenzt. Bei der sogenannten Komposition werden die Wirkungen der Regeln R bezüglich der oder jeder Ausgangsgröße SW₁...SWₙ, z.B. durch eine Maximalwertbildung aller Zugehörigkeitsfunktionen der jeweiligen Ausgangsgröße SW₁...SWₙ, einander überlagert. Zum Schluß erfolgt in einem Berechnungselement 5c die als Defuzzyfizierung DF bezeichnete Berechnung des Wertes der Ausgangsgröße SW. Dies geschieht z.B. durch Berechnung der Lage eines Schwerpunktes der von allen begrenzten Zugehörigkeitsfunktionen Z_{A} eingeschlossenen Fläche über dem Wertebereich der jeweiligen Ausgangsgröße SW₁...SWₙ.

Bei der Kombination mit einem neuronalen Netz werden einige oder alle Parameter des Fuzzy-Reglerbausteins 5 durch ein oder mehrere neuronale Netze bestimmt. Dabei werden die Zugehörigkeitsfunktionen Z_{E}, Z_{A} der Fuzzyfizierung oder auch der Defuzzyfizierung durch entsprechende neuronale Netze bestimmt. Durch die Kombination von Fuzzy-Regelung und neuronalen Netzen kann daher das Regelverhalten optimiert werden, zumal die neuronalen Netze selbstlernend sind. Somit sind die Parameter der Fuzzy-Regelung an die üblicherweise sehr komplexen und sich aufgrund von Änderungen von Randbedingungen zeitlich ändernden Vorgänge im Verbrennungsraum 1 besonders gut anpaßbar.

Da aufgrund der geringen Meßzeit der beiden optischen Sensoren 2 und 3 von ca. fünf Sekunden sehr schnell räumlich differenzierte, dreidimensionale Meßsignale in Form der Meßfelder F zur Verfügung stehen, stehen auch die mittels Fuzzy- oder Neuro-Fuzzy-Logik anhand der Temperaturverteilung und der Konzentrationsprofile der Reaktionsprodukte ermittelten Sollwerte SW₁...SWₙ praktisch in Echtzeit zur Verfügung.

Wesentliche Führungsgröße für die Feuerungsregelung ist dabei ein erster Sollwert SW₁ für die Zusammensetzung eines dem Verbrennungsprozeß über die Einrichtung 11 zuzuführenden Brennstoffgemisches B. Der Sollwert SW₁ dient dem Reglerbaustein 10 zur Bildung des Stellsignals U₁ für die Menge der jeweiligen Bestandteile des Brennstoffgemischs B. Zum Beispiel gibt bei einer Müllverbrennungsanlage der Sollwert SW₁ die Soll-Abfallmischung für eine manuelle oder automatische Zuführung vor.

Zur Korrektur starker Schwankungen der Heizoder Brennwerte der verwendeten Brennstoffe B wird ein zweiter Sollwert SW₂ für die Luftzufuhr zum Verbrennungsprozeß ermittelt, der dem Reglerbaustein 10 zur Bildung des Stellsignals U₂ für die Menge von dem Verbrennungsraum 1 über die Einrichtung 12 zuzuführender Luft L dient.

Zur Erzielung einer besonders geringen Schadstoffemission erhält der Reglerbaustein 10 der Regeleinrichtung 6 vom Fuzzy-Reglerbaustein 5 einen dritten Sollwert SW₃ für die Dosis eines Zugabestoffes H. Aus diesem dritten Sollwert SW₃ bildet der Reglerbaustein 10 das Stellsignal U3 für die Menge der dem Verbrennungsprozeß über die Zuführeinrichtung 13 als Zugabestoff H beispielsweise zuzuführenden Harnsäure. Dadurch kann direkt am Ort der Entstehung von Schadstoffen regelungstechnisch eingegriffen werden.

## Patentansprüche

1. Verfahren zur Feuerungsregelung einer Dampferzeugungsanlage, bei dem die Temperatur und die Konzentration mindestens eines im Verbrennungsprozeß entstehenden Reaktionsproduktes ermittelt werden, wobei die Zusammensetzung des dem Verbrennungsprozeß zugeführten Reaktionsgemisches (B, L, H) in Abhängigkeit von der räumlichen Temperaturverteilung und des Konzentrationsprofil im Verbrennungsraum mittels mindestens einem Sollwert gesteuert wird,**dadurch gekennzeichnet, daß** der Sollwert durch Fuzzy- oder Neuro-Fuzzy-Logik ermittelt wird und ein erster Sollwert (SW₁) für die Zusammensetzung von dem Verbrennungsprozess zuzuführendem Brennstoff (B) ermittelt wird.

2. Verfahren nach Anspruch 1 oder 2.
**dadurch gekennzeichnet, daß** ein zweiter Soll-. wert (SW₂) für die Zufuhr von Luft (L) zum Verbrennungsprozeß ermittelt wird.

3. Verfahren nach einem der Ansprüche 1 oder 2,
**dadurch Gekennzeichnet, daß** ein dritter Sollwert (SW_{F}) für die Dosis eines Zugabesloff (H) zum Brennstoff (B) ermittelt wird.

4. Verfahren nach einem der Ansprüche 1 bis 3,
**dadurch gekennzeichnet, daß** aus der Tamperatun/ertailung und/oder aus dem Konzentrationsprofil die Verteilung bzw. das Profil charakterisierende Daten (M) abgeleitet und zur Bestimmung des oder jedes Sollwertes (SW.) herangezogen werden.

5. Verfahren nach einem der Ansprüche 1 bis 4,
**dadurch gekennzeichnet, daß** die räumliche Temperaturverteilung und das räumliche Konzentrationsprofil aus einem vom Verbrennungsprozeß aufgenommenen Emissionsspektrum (D) tomograhpisch rekonstruiert werden.

6. Vorrichtung zur Feuerungsregelung einer Dampferzeugungsanlage mit einer Verbrennungsraum (1), und mit einem mit mindestens zwei optischen Sensoren (2, 3) zur Aufnahme von Strahlungsdaten (D) aus dem Verbrennungsraum (1) verbundenen Datenverarbeitungssystem (4), zur Durchführung des Verfahrens nach einem der Ansprüche 1 bis 5, **gekennzeichnet durch**,
eine mit dem Datenverarbeitungssystem (4) verbundene Regeleinrichtung (6), die einen Fuzzy- oder Neuro-Fuzzy-Reglerbaustein (5) zur Ermittlung einer Anzahl von Sollwerten (Swₙ) umfaßt, wobei die Zusammensetzung des dem Verbrennungsraum (1) zugeführten Reaktionsgemisches (B,L,H) in Abhängigkeit von den Strahlungsdaten (D) mittels des oder mehrerer Sollwerte(s) gesteuert ist, und
wobei die Zusammensetzung von dem Verbrennungsprozess zuzuführendem Brennstoff mittels eines ersten Sollwertes (SW₁) ermittelt ist.

7. Vorrichtung nach Anspruch 6,
**dadurch gekennzeichnet, daß** dir Regeleinrichlung (6) einen mit dem Fuzzy- oder Neuro-Fuzzy-Reglerbaustein (5) verbundenen weiteren Reglerbaustein (10) umfaßt.

8. Vornchtung nach Anspruch 6 order 7
**dadurch gekennzeichnet, daß** das Datenverarbeitungssystem (4) mit einem Anzeigegerät (17) zur Darstellung des oder jedes Sollwertes (SWₙ) für die Zusammensetzung des Reaktionsgemisches (8. L. H) verbunden ist.

9. Vorrichtung nach einem der Ansprüche 6 bis 8,
**dadurch gekennzeichnet, daß** die Regeleinrichtung (6) über jeweils eine Ansteuerleitung (14.15. 16) mit einer ersten Zuführeinrichtung (11) für Brennstoff (B) und mit einer zweiten Zuführeinrichtung (12) für Luft (L) sowie mit einer dntten Zuführeinrichtung (13) für einen Zuschlagstoff (H) verbunden ist.

## Claims

1. Method for controlling the firing of a steam-generation plant, wherein the temperature and the concentration of at least one reaction product, which is produced in the combustion process, are ascertained, with the composition of the reaction mixture (B, L, H) to the combustion process being controlled as a function of the spatial temperature distribution and the concentration profile in the combustion chamber by means of at least one set point, **characterised in that** the set point is ascertained by fuzzy logic or neuro-fuzzy logic and a first set point (SW₁) is ascertained for the composition of fuel (B) to be fed to the combustion process.

2. Method according to claim 1 or 2 (sic), **characterised in that** a second set point (SW₂) is ascertained for the feed of air (L) to the combustion process.

3. Method according to one of claims 1 or 2, **characterised in that** a third set point (SW₃) is ascertained for the dose of an additive (H) to the fuel (B).

4. Method according to one of claims 1 to 3, **characterised in that** data (M) is derived from the temperature distribution and/or from the concentration profile, which data characterises the distribution or the profile respectively, and is used to determine the or each set point (SWₙ) .

5. Method according to one of claims 1 to 4, **characterised in that** the spatial temperature distribution and the spatial concentration profile are reconstructed tomographically from an emission spectrum (D) recorded from the combustion process.

6. Apparatus for controlling the firing of a steam-generation plant, having a combustion chamber (1) and having a data processing system (4) connected to at least two optical sensors (2, 3) for recording radiation data (D) from the combustion chamber (1), for carrying out the method according to one of claims 1 to 5, **characterised by** a control device (6) which is connected to the data processing system (4) and comprises a fuzzy or a neuro-fuzzy controller module (5) for ascertaining a number of set points (SWₙ), wherein the composition of the reaction mixture (B, L, H) fed to the combustion chamber (1) is controlled as a function of the radiation data (D) by means of the set point or a plurality of set points and wherein the composition of fuel to be fed to the combustion process is ascertained by means of a first set point (SW₁).

7. Apparatus according to claim 6, **characterised in that** the control device (6) comprises a further controller module (10) which is connected to the fuzzy or neuro-fuzzy controller module (5).

8. Apparatus according to claim 6 or 7, **characterised in that** the data-processing system (4) is connected to an indicating device (17) for the display of the or each set point (SWₙ) for the composition of the reaction mixture (B, L, H).

9. Apparatus according to one of claims 6 to 8, **characterised in that** the control device (6) is connected, by.way of a respective drive line (14, 15, 16), to a first feeding device (11) for fuel (B) and to a second feeding device (12) for air (L) and also to a third feeding device (13) for an additional material (H).

## Revendications

1. Procédé de régulation de la chauffe d'une installation de production de vapeur, dans lequel on détermine la température et la concentration d'au moins un produit de réaction qui se forme lors du processus de combustion, la composition du mélange de réaction (B, L, H) amené au processus de combustion étant piloté en fonction de la distribution spatiale des températures et du profil de concentration dans la chambre de combustion, à l'aide d'au moins une valeur de consigne, **caractérisé en ce que** l'on détermine la valeur de consigne par une logique floue ou par une logique floue neuronale et l'on détermine une première valeur de consigne SW1 pour la composition du combustible (B) devant être amené au processus de combustion.

2. Procédé selon la revendication 1, **caractérisé en ce qu'**on détermine une deuxième valeur de consigne SW2 pour l'amenée d'air (L) au processus de combustion.

3. Procédé selon l'une des revendications 1 ou 2, **caractérisé en ce qu'**on détermine une troisième valeur de consigne SW3 pour la dose d'un additif (H) ajouté au combustible (B).

4. Procédé selon l'une des revendications 1 à 3, **caractérisé en ce qu'**on déduit de la distribution des températures et/ou du profil de concentration les données (M) qui caractérisent la distribution ou le profil, et on les utilise pour déterminer la ou chaque valeur de consigne SWₙ.

5. Procédé selon l'une des revendications 1 à 4, **caractérisé en ce que** la distribution spatiale des températures et le profil spatial de concentration sont reconstruits par tomographie à partir d'un spectre d'émission (D) enregistré du processus de combustion.

6. Dispositif de régulation de la chauffe d'une installation de production de vapeur, comportant une chambre de combustion (1), et un système de traitement des données (4), relié à au moins deux capteurs optiques (2, 3) destinés à saisir des données de rayonnement (D) à partir de la chambre de combustion (1), pour la mise en oeuvre du procédé selon l'une des revendications 1 à 5, **caractérisé par** un dispositif de régulation (6), relié à un système de traitement des données (4), dispositif de régulation qui comporte un module régulateur (5) en logique floue ou logique floue neuronale, pour déterminer un certain nombre de valeurs de consigne (SWₙ), la composition du mélange réactionnel (B, L, H) amené à la chambre de combustion (1) étant pilotée en fonction des données de rayonnement (D) à l'aide de la ou des plusieurs valeurs de consigne et la composition du combustible à envoyer à l'opération de combustion est déterminée au moyen d'une première valeur de consigne (SW₁).

7. Dispositif selon la revendication 6, **caractérisé en ce que** le dispositif de régulation (6) comporte un module régulateur supplémentaire (10) relié au module régulateur (5) en logique floue ou en logique floue neuronale.

8. Dispositif selon la revendication 6 ou 7, **caractérisé en ce que** le système de traitement des données (4) est relié à un dispositif d'affichage (17) pour visualiser la ou chaque valeur de consigne (SWₙ) pour la composition du mélange réactionnel (B, L, H).

9. Dispositif selon l'une des revendications 6 à 8, **caractérisé en ce que** le dispositif de régulation (6) est, par l'intermédiaire d'une ligne de commande (14, 15, 16), relié à un premier dispositif (11) d'amenée du combustible (B), et, par l'intermédiaire d'une autre ligne de commande, à un deuxième dispositif (12) d'amenée de l'air (L) et à un troisième dispositif (13) d'amenée d'un additif (H).
